Europäisches Patentamt

(19) European Patent Office

Office européen des brevets

(11) Publication number : **0 350 980 B1**

# (12) EUROPEAN PATENT SPECIFICATION

(45) Date of publication of patent specification :
**13.05.92 Bulletin 92/20**

(51) Int. Cl.⁵ : **D03D 49/04, G05D 15/01**

(21) Application number : **89201589.2**

(22) Date of filing : **19.06.89**

(54) **Device for setting the warp tension on a weaving machine.**

(30) Priority : **12.07.88 BE 8800808**

(43) Date of publication of application :
**17.01.90 Bulletin 90/03**

(45) Publication of the grant of the patent :
**13.05.92 Bulletin 92/20**

(84) Designated Contracting States :
**CH DE FR IT LI**

(56) References cited :
**EP-A- 0 117 479**
**EP-A- 0 257 707**

(73) Proprietor : **Picanol N.V.**
**Polenlaan 3-7**
**B-8900 Ieper (BE)**

(72) Inventor : **Deconinck, Filip**
**Keiberg 34**
**B-8590 Zwevegem (BE)**

(74) Representative : **Donné, Eddy**
**Bureau M.F.J. Bockstael nv Arenbergstraat 13**
**B-2000 Antwerpen (BE)**

EP 0 350 980 B1

Jouve, 18, rue Saint-Denis, 75001 PARIS

## Description

This invention concerns a device for setting the warp tension on a weaving machine, more particularly a device by means of which the warp tension is set automatically and setting too high a warp tension is avoided automatically .

It is known that weaving yarns are characterized by two yarn parameters, namely the type of material used, for example cotton, polyester etc., and the yarn number, which specifies the relation between the weight and the length of the yarn. These exist tables which enable the maximum permissible tension in the yarn to be determined on the basis of the above-mentioned yarn parameters. These tables also give the breaking tension for a particular type of thread.

It is also possible to calculate the breaking tension of a particular warp, as a function of the number of warp threads and the types of yarn used. By breaking tension of the warp is meant the tension at which if it is exceeded a large number of warp thread breaks will occur.

It is also known that the warp tension on weaving machines fluctuates during the weaving process as a result of the extension which occurs due to the harness movements and the beating up. In order to prevent thread breaks, the peaks of this fluctuating tension must always be less than the breaking tension of the warp determined by the above-mentioned method. This means that the maximum permissible value of the average warp tension is less than the breaking tension of the warp calculated from the yarn parameters. Said fluctuations and thus also the difference between the calculated breaking tension and the maximum permissible average tension are a function of the weaving parameters, consisting essentially of the weaving machine speed, since the machine speed determines the beat-up force of the reed; the number of harnesses; the opening angle of the shed; the distance between the backrest and the fell line, etc. The maximum permissible average warp tension is normally 30% lower than the breaking tension of the warp. On modern high-speed machines with a narrow shed and a small number of harnesses, the difference can be reduced to 10%. The narrower the shed and the smaller the number of harnesses, the lower the variations in tension during weaving.

In practice, the average warp tension during weaving is determined on the basis of experimental values. However, it is known that the weaver can alter these values during the weaving process, selecting optimum settings on the basis of the appearance of the woven cloth. The technique however has the disadvantage that in many cases the weaver sets the average warp tension too high, so that as a result of the fluctuating warp tension the maximum permissible value is exceeded, thus leading to warp thread breaks occurring regularly.

The present invention has as its aim a device for setting the warp tension on weaving machines, by means of which the setting is made automatically as a function of the yarn and weaving parameters, while setting the tension too high by the weaver is excluded. For this purpose the device according to the invention consists essentially in the combination of an input unit for entering the yarn parameters; an input unit for entering the weaving parameters; an arithmetic unit which determines the maximum permissible average tension in the warp on the basis of the weaving parameters and yarn parameters; a setting device which makes it possible to generate a signal which is representative of the desired average warp tension; a limiting device which works in conjunction with the arithmetic unit and which limits at least the setting of the average warp tension to the maximum permissible average warp tension calculated by the arithmetic unit.

In order to better explain the characteristics of the invention, a preferred embodiment is now described, by way of example only and without being limitative in any way, with reference to the accompanying drawings, where:

figs. 1 to 3 are graphs representing the warp tension in a weaving machine;

fig. 4 is a schematic diagram of the device according to the invention;

fig. 5 shows a tension sensor for measuring the warp tension on a weaving machine, such as can be used in the embodiment according to fig. 4.

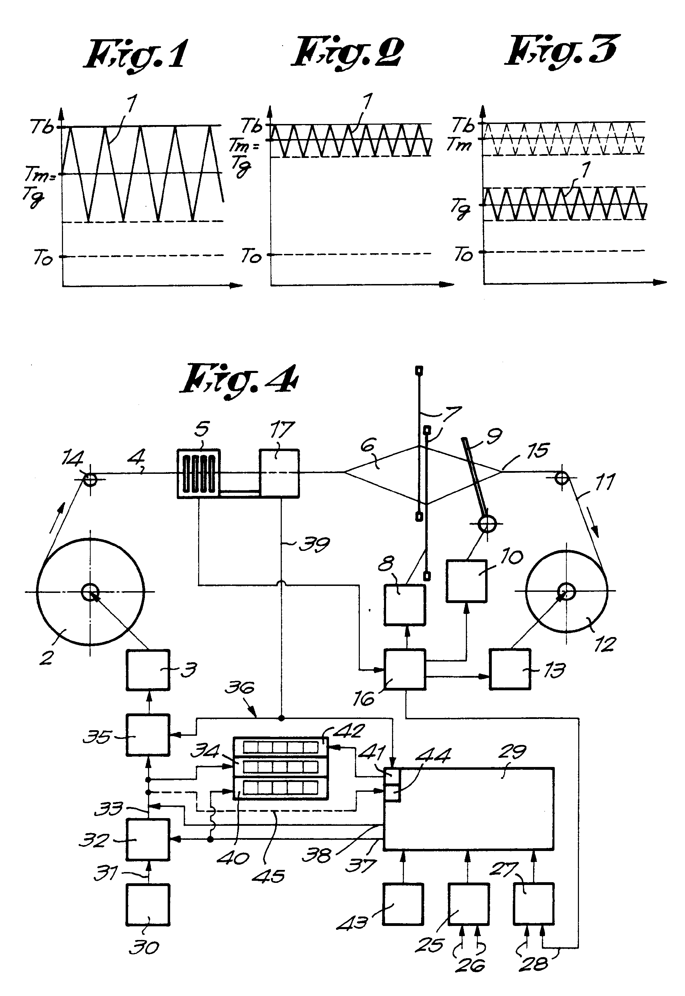

Fig. 1 shows the curve 1 of the variation with time of the warp tension on a weaving machine. As explained in the preamble, the breaking tension Tb of the warp can be calculated on the basis of the yarn parameters. However, as can be clearly seen from fig. 1, the maximum permissible average tension Tm is smaller than said breaking tension Tb, in order to prevent the upper peaks of the curve 1 exceeding the value of Tb. The maximum permissible average warp tension Tm is normally 30% lower than the breaking tension Tb.

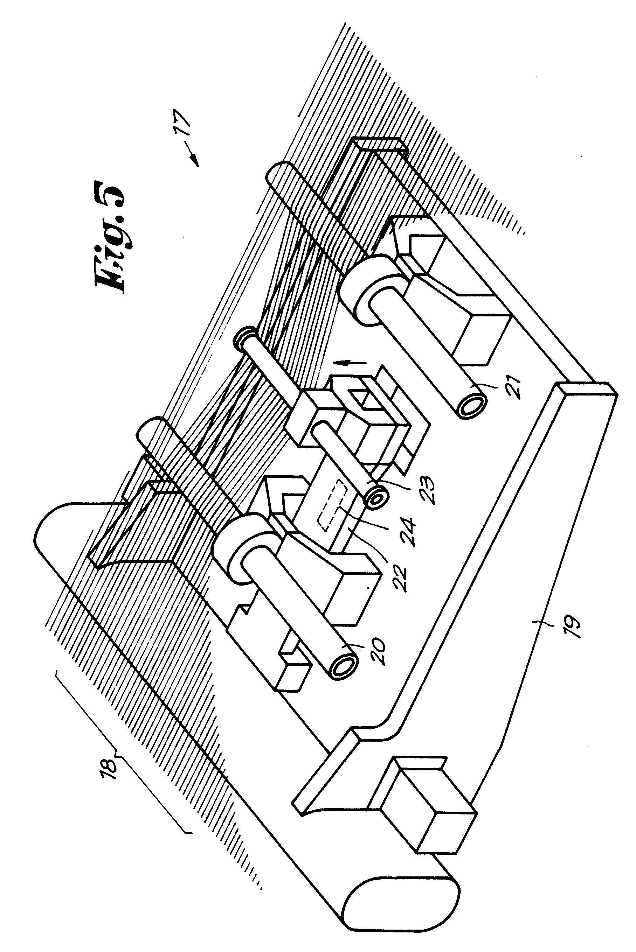

On modern high-speed weaving machines with a narrow shed and a small number of harnesses, the amplitude of the curve 1 is smaller, with the result that, shown in fig. 2, on such weaving machines the maximum permissible average warp tension Tm can reach 90% of the breaking tension Tb.

It is known, as shown in fig. 3, for the warp tension to be set such that the average warp tension Tg has an optimum value. This optimum value is normally determined experimentally and laid down in tables. Usually, the warp tension is set according to the yarn parameters such that the value Tg corresponds to the optimum average warp tension. However, after this value has been set it is normal for the weaver to alter the average warp tension according to the appearance of the cloth. In doing so, the weaver has no control over whether the curve 1 is displaced either partially or completely above the value Tb, with the disadvantage that the chance of warp breaks is increased.

The present invention has as its aim a device which does not have the above-mentioned disadvantage, i.e. by means of which the necessary measures are taken in good time automatically. This device is now described with reference to the schematic diagram in fig. 4.

Fig. 4 is a schematic diagram of a weaving machine, showing the warp beam 2, the warp let-off motion 3, the warp 4, the warp stop motion 5, the shed 6, the harnesses 7, the harness drive 8, the backrest 9, the sley drive 10, the cloth 11, the cloth beam 12, the cloth beam drive 12, the sley 14, the fell line 15 and the weaving machine control 16. Also shown schematically is a tension sensor 17, which as shown in fig. 5 can operate with a particular number of warp threads 18.

As shown in fig. 5, the tension sensor 17 essentially consists of a frame 19 on which are mounted two rod-shaped thread guides 20 and 21, with between them a third thread guide 23 mounted on a support 22 which can flex elastically. The thread guides 20, 21, and 23 essentially extend parallel to each other. They are arranged so that they can operate with a limited number of warp threads 18, such that the middle thread guide 23 is displaced, i.e. the support 22 flexes, as a function of the warp tension. The support 22 is provided with a strain gauge 24 by means of which a signal representative of the warp tension can be measured. The frame 19 can for example be attached to the frame of the warp stop motion 5.

The special feature of the present invention is that it provides a device for setting the warp tension, where said device consists essentially in the combination of an input unit 25 for entering the yarn parameters 26; an input unit 27 for entering the weaving parameters 28; an arithmetic unit 29 which on the basis of the yarn parameters 26 and the weaving parameters 28 determines the maximum permissible average tension in the warp 4; a setting device 30 which makes it possible to generate a signal 31 which is representative of the desired average warp tension; and a limiting device 32 which operates in conjunction with the arithmetic unit 29 and which limits at least the setting of the average warp tension, i.e. which limits the signal 31 to the maximum permissible average warp tension calculated by the arithmetic unit 29. The output 33 of the limiting device 32 can either be connected to a display unit 34 or can be directly connected to a control unit 35 which is coupled to the machine components which can affect the average tension in the warp 4, where said machine components essentially concern the warp let-off motion 3, such that said control unit 35 can control said machine components according to the signal at the output 33. In order to obtain a correct adjustment of the warp tension, the device according to the invention is preferably equipped with a feedback 36 wherein the warp tension measured by the above-mentioned tension sensor 17 is used .

The operation of the device is as follows. The arithmetic unit 29 calculates the maximum permissible average tension Tm in the warp 4 from the yarn parameters 26, preferably consisting of the type of material used and the yarn number, and from the weaving parameters 28, preferably consisting of the speed of the weaving machine, the number of harnesses 7, the opening angle of the shed 6, and the distance between the backrest 14 and the fell line 15. The yarn parameters 26 are supplied to the arithmetic unit 29 via the input unit 25. The weaving parameters 28 can be supplied to the arithmetic unit 29 via the input unit 27, or by entering them either manually or automatically from the general control 16 which controls the main parts of the weaving machine.

For calculating the maximum permissible values, use can be made of tables stored in the memory of the arithmetic unit 29, for example giving the breaking tension Tb as a function of the yarn number and type, together with calculations of the strain caused by the harness motions and the reed beat-up, where said strain in turn is determined by the numbers of harnesses 7, the opening angle of the shed 6, the distance between the backrest 14 and the fell line 15 and possibly other geometric parameters of the weaving machine also. Since for a particular type of weaving machine the above-mentioned weaving parameters and mostly identical, it is normally possible to work with a constant factor which for most weaving machines is 10%. This means that the maximum permissible average tension in the warp 4 in the above-mentioned case is equal to the breaking tension minus 10%. The calculated value for the maximum permissible average tension Tm in the warp 4 can for example be supplied to the limiting device 32 via the output 37.

Preferably, use is made of an arithmetic unit 29 which in addition to calculating the maximum permissible average tension Tm also enables a first automatic setting of the average tension Tg to be carried out. For this purpose, Tg is taken as a fixed percentage of Tm, for example 60%. The conversion is carried out automatically in the arithmetic unit 29. This value is then supplied as an output signal 38 to the control unit 35. This value can also be announced to the weaver by means of the display unit 34.

The control unit 35 controls the warp let-off motion 3 in such a way that in the first instance the average warp tension measured, or that the signal 39 obtained by means of the tension sensor 17 is equal to the output signal 38 of the arithmetic unit 29.

The weaver can then by means of the setting device 30 himself set a value which is determinant for the average tension Tg in the warp 4. This value is supplied via the limiting device 32 and the output 33 to the control unit 35, and takes the place of the above-mentioned automatic setting carried out in the first instance. The weaver can increase or decrease the value as he wishes in order to obtain what according to him is the best appearance of the cloth. This value can also be made visible via the display unit 34.

Setting too high an average tension Tg in the warp 4 is avoided since the set value, i.e. signal 31, is automatically limited by the limiting device 32 to the maximum permissible average tension in the warp 4 calculated by the arithmetic unit 29. The value Tm can also be announced to the weaver via a display unit 40. Another possibility is that if too high a value is set, an announcement is given automatically via a display unit can announce that another, lower value must be set.

Here it should be noted that a tension sensor 17 such as shown in fig. 5 works optimally only for particular tensions or forces, i.e. within a particular measuring range. Thus for example the measuring range may lie between 20 and 80 Newtons. If the thread tension is 0.04 N per thread, then between fifty and two hundred warp threads 18 may be laid on the tension detector 17. Clearly, if the threads have a thickness of 1 mm and if the thread guide 23 is ten cm wide, then it should preferably have one hundred threads laid on it. One particular aspect of the present invention is that the above-mentioned arithmetic unit 29 is equipped with a means 41 which automatically calculates the number of warp threads 18 to be laid on the tension sensor 17 as a function of the two yarn parameters 26 in order to make optimum use of the measuring range, where this number is automatically displayed on a display unit 42. A means 43 is also provided to supply the measuring range of the tension detector 17 to the arithmetic unit 29.

Since after the first automatic setting the weaver can still carry out a setting by means of the setting device 30, as the measuring range of the tension sensor 17 is usually small, clearly the actual tension will soon vary outside the measuring range, which will normally pass unnoticed. In order to prevent this, the device according to the invention is preferably also provided with a monitoring device 44 working in conjunction with the arithmetic unit 29, so that whenever the tension detector 17 approaches the limits of its measuring range, a switchover to another measuring range is automatically ordered. The monitoring device 44 is supplied constantly with a signal which is representative of the warp tension setting, via line 45, such that the set measuring range can be constantly monitored. Switching over to another measuring range can be done simply by increasing or decreasing the number of warp threads 15 present on the thread guide 23. The monitoring device 44 is preferably also coupled to the display unit 42, such that the new number of warp threads to be laid on the thread guide 23 is shown on this display unit 42.

Clearly, the limiting device 32 can also provide a lower limit, in order to be prevent the tension being lowered too much by means of the setting device 30. In this case, the limiting device 32 ensures that the above-mentioned curve 1 does not fall below a minimum value To .

## Claims

1. Device for setting the warp tension on weaving machines, characterized in that it consists of the combination of an input unit (25) for entering the yarn parameters (26) of the warp threads being using for weaving; an input unit (27) for entering the yarn weaving parameters (28); an arithmetic unit (29) which determines the maximum permissible average tension (Tm) in the warp (4) on the basis of the weaving parameters (28) and the yarn parameters (26); a setting device (30) which enables a signal (31) to be generated which is representative of the required average warp tension (Tg); and a limiting device (32) connected to the arithmetic unit (29) which limits at least the setting of the average warp tension (Tg) to the maximum permissible average warp tension (Tm) calculated by the arithmetic unit (29).

2. Device according to claim 1, characterized in that the setting device (30) which enables a signal (31) to be generated which is representative of the required average warp tension (Tg) is coupled via the above-mentioned limiting device (32) to a control unit (35), where said control unit controls the machine components which can affect the average tension in the warp.

3. Device according to claim 2, characterized in that the control unit (35) controls at least the warp let-off motion (3).

4. Device according to claim 3, characterized in that the control unit (35) has a feedback (36) from a tension sensor (17) which operates on the warp (4).

5. Device according to claim 4, characterized in that the tension sensor (17) is of the type which carries out a measurement across a limited number of warp threads (18), and that the device is equipped with a monitoring device (44) which can monitor the measuring range of the tension sensor (17) and which, whenever the limit of the measuring range is reached, automatically calculates the new number of warp threads needed on the tension sensor necessary to set a new measuring range.

6. Device according to any of the above claims, characterized in that the input unit (27) for entering the weaving parameters (28) is connected to the general control (16) of the weaving machine.

**Patentansprüche**

1. Vorrichtung zur Regelung der Kettenspannung auf Webmaschinen, dadurch gekennzeichnet, dass sie besteht aus der Kombination einer Eingabeeinheit (25) zur Eingabe der Fadenparameter (26) der zum Weben benutzten Kettenfäden; einer Eingabeeinheit (27) zur Eingabe der Webparameter (28); einer Recheneinheit, die auf Grund der Webparameter (28) und der Fadenparameter (26) die höchstzulässige mittlere Spannung (Tm) in der Kette (4) bestimmt; einer Regelvorrichtung (30), die es ermöglicht ein für die verlangte mittlere Kettenspannung (Tg) repräsentatives Signal (31) zu erzeugen; und einer mit der Recheneinheit (29) verbundenen Begrenzungsvorrichtung (32), die wenigstens die Regelung der mittlere Kettenspannung (Tg) auf die höchstzulässige, von der Recheneinheit (29) berechnete mittlere Kettenspannung (Tm), begrenzt.

2. Vorrichtung nach Anspruch 1, dadurch gekennzeichnet, dass die Regelvorrichtung (30), die es ermöglicht, ein für die verlangte mittlere Kettenspannung (Tg) repräsentatives Signal (31) zu erzeugen, über die obenerwähnte Begrenzungsvorrichtung (32), mit einer Steuereinheit (35) verbunden ist, wobei besagte Steuereinheit die Maschinenbauteile, die die mittlere Spannung in der Kette beeinflussen können, steuert.

3. Vorrichtung nach Anspruch 2, dadurch gekennzeichnet, dass die Steuereinheit (35) wenigstens die Kettenabfuhrbewegung (3) steuert.

4. Vorrichtung nach Anspruch 3, dadurch gekennzeichnet, dass die Steuereinheit (35) von dem auf die Kette (4) wirkenden Spannungsmessfühler (17) eine Rückmeldung (36) erhält.

5. Vorrichtung nach Anspruch 4, dadurch gekennzeichnet, dass der Spannungsmessfühler (17) vom Typ ist, der eine Messung über eine beschränkte Zahl von Kettenfäden (18) ausführt, und dass die Vorrichtung mit einer Uberwachungsvorrichtung (44) ausgestattet ist, die den Messbereich des Spannungsmessfühlers (17) überwachen kann, und die, sobald die Messbereichsgrenze erreicht wird, automatisch die neue Zahl der vom Spannungsfühler verlangten Kettenfäden errechnet, nötig um einen neuen Messbereich einzustellen.

6. Vorrichtung nach irgendwelchem der vorhergehenden Ansprüche, dadurch gekennzeichnet, dass die Eingabeeinheit (27) zur Eingabe der Webparameter (28) mit der Hauptbedienung (16) der Webmachine verbunden ist.

**Revendications**

1. Dispositif pour le réglage de la tension de chaîne sur des machines à tisser, caractérisé en ce qu'il consiste en une combinaison d'un périphérique d'entrée (25) pour l'imputation des paramètres du fil (26) des fils de chaîne utilisés pour le tissage ; un périphérique d'entrée (27) pour l'imputation des paramètres de tissage (28) ; d'une unité de calcul (29) définissant la tension moyenne maximale autorisée (Tm) de la chaîne (4) basée sur les paramètres de tissage (28) et les paramètres de fil (26); un dispositif de réglage (30) permettant la création d'un signal (31) étant représentatif de la tension moyenne de chaîne nécessaire (Tg) ; et un dispositif de limitation (32) connecté à l'unité de calcul (29) limitant au moins le réglage de la tension moyenne de chaîne (Tg) par rapport à la tension moyenne maximale autorisée (Tm) calculée par l'unité de calcul (29).

2. Dispositif suivant la revendication 1, caractérisé en ce que le dispositif de réglage (30) permettant la création d'un signal (31) étant représentatif de la tension moyenne de chaîne nécessaire (Tg) est couplé par le dispositif de limitation (32) mentionné ci-dessus avec une unité de commande (35), ou ladite unité de commande commande les composants de la machine pouvant influencer la tension moyenne de la chaîne.

3. Dispositif suivant la revendication 2, caractérisé en ce que l'unité de commande (35) commande au moins le mouvement d'enlèvement (3) de la chaîne.

4. Dispositif suivant la revendication 3, caractérisé en ce que l'unité de commande (35) reçoit une remontée de l'information (36) d'un capteur de tension (17) agissant sur la chaîne (4).

5. Dispositif suivant la revendication 4, caractérisé en ce que le capteur de tension (17) est du type exécutant une mesure sur un nombre défini de fils de chaîne (18), et que le dispositif est équipé d'une unité de surveillance (44) pouvant contrôler la plage de mesure du capteur de tension (17) et qui, lorsque la limite de plage de mesure est atteinte, calcule automatiquement la nouvelle quantité de fils de chaîne exigés sur le capteur de tension nécessaire à la définition d'une nouvelle plage de mesure.

6. Dispositif suivant l'une des revendications précédentes, caractérisé en ce que le périphérique d'entrée (27) pour l'imputation des paramètres de tissage (28) est relié au processeur central (16) de la machine à tisser.

Fig.1  Fig.2  Fig.3

Fig.4

Fig.5

EP 0 350 980 B1